# EUROPÄISCHE PATENTANMELDUNG

(11) **EP 4 755 659 A1**
(43) Veröffentlichungstag der Anmeldung: **10.06.2026**
(21) Anmeldenummer: 25213212.1
(22) Anmeldetag: 04.11.2025
(51) Int. Cl.: B60C 11/16

(54) **SPIKE UND FAHRZEUGREIFEN MIT SPIKES IM LAUFSTREIFEN**

(30) Priorität: 03.12.2024 DE 102024211537
(71) Anmelder: Continental Reifen Deutschland GmbH, 30175 Hannover (DE)
(72) Erfinder: Schlittenhard, Jan, 30175 Hannover (DE)
(74) Vertreter: Continental Corporation

(57) **Zusammenfassung**

Spike (1) zum Verankern in einem Spikeloch eines Laufstreifens eines Fahrzeugreifens mit einem Spikekörper (2), welcher einen Fußflansch (3), einen oberen Körperabschnitt (2c) und einen im Spikekörper (2) verankerten Spikepin (4) aufweist, welcher mit einem äußeren Pinabschnitt (4a) den oberen Körperabschnitt (2c) des Spikekörpers (2) überragt, wobei der Spikepin (4) drei gleich große Winkel miteinander einschließende Arme (4b) aufweist, die gemäß den Zacken eines dreizackigen Sterns verlaufen.

Der obere Körperabschnitt (2c) des Spikekörpers (2) ist einem sechsseitigen Prisma ähnlich gestaltet und weist eine in Draufsicht gleichermäßen sechseckartig gestaltete Oberseite (6) und eine Außenseite mit den Prismenseiten entsprechenden Flächenelementen (5) auf, zwischen welchen jeweils ein von weiteren Flächenelementen (5') gebildeter gerundeter Eckbereich (7a, 7b) ausgebildet ist, zu welchen Eckbereichen drei erste und drei zweite Eckbereiche (7a, 7b) gehören, die einander abwechseln und unterschiedlich große Innenwinkel (α, β) aufweisen.

## Beschreibung

Die Erfindung betrifft einen Spike zum Verankern in einem Spikeloch eines Laufstreifens eines Fahrzeugreifens mit einem Spikekörper, welcher einen Fußflansch, einen oberen Körperabschnitt und einen im Spikekörper verankerten Spikepin aufweist, welcher mit einem äußeren Pinabschnitt den oberen Körperabschnitt des Spikekörpers überragt, wobei der Spikepin drei insbesondere gleich große Winkel miteinander einschließende Arme aufweist, die gemäß den Zacken eines dreizackigen Sterns verlaufen. Die Erfindung betrifft ferner einen Fahrzeugreifen mit Spikes im Laufstreifen.

Ein derartiger Spike ist aus der US D902138 S bekannt.

In den nordischen europäischen Ländern sowie in Kanada wird viel Streumaterial auf Straßen verwendet, um die Haftung von Reifen mit Spikes und von Winterreifen und Ganzjahresreifen zu verbessern. Diesbezüglich sind Spikes mit Armen, die gemäß den Zacken eines dreizackigen Sterns verlaufen, besonders vorteilhaft. Jedoch ist der Spikekörper bei derartigen Pindesigns im oberen Bereich hinsichtlich mechanischen Abriebs und Verschleiß anfällig. Das Streumaterial verursacht einen ungleichmäßigen Verschleiß des Spikekörpers, welcher Lücken zwischen dem Spikekörper und der umgebenden Gummimatrix des Laufstreifens entstehen lässt, sodass dort Streupartikel eingeschlossen werden können, wodurch der Verschleiß des Spikekörpers beschleunigt wird. Die Streupartikel können den Spikekörper von der Seite her abschleifen und zum Aufspalten des Spikekörpers führen, bis schließlich der Spikepin verloren geht.

Der Erfindung liegt die Aufgabe zu Grunde, bei einem Spike der eingangs genannten Art den erwähnten Verschleiß des Spikekörpers zu vermeiden oder zumindest deutlich zu verringern.

Gelöst wird die gestellte Aufgabe erfindungsgemäß dadurch, dass der obere Körperabschnitt des Spikekörpers einem sechsseitigen Prisma ähnlich gestaltet ist, eine in Draufsicht gleichermäßen sechseckartig gestaltete Oberseite und eine Außenseite mit den Prismenseiten entsprechenden Flächenelementen aufweist, zwischen welchen jeweils ein von weiteren Flächenelementen gebildeter gerundeter Eckbereich ausgebildet ist, zu welchen Eckbereichen drei erste und drei zweite Eckbereiche gehören, die einander abwechseln, wobei in den ersten Eckbereichen gleich große, Winkelhalbierende aufweisende erste Innenwinkel von 80° bis 130°und in den zweiten Eckbereichen gleich große, Winkelhalbierende aufweisende zweite Innenwinkel von 110° bis 170° vorliegen, wobei die ersten Innenwinkel um mindestens 5° kleiner sind als die zweiten Innenwinkel und wobei der Spikepin im Spikekörper derart verankert ist, dass sich seine Arme in Draufsicht auf den Spikekörper betrachtet parallel zu den Winkelhalbierenden der ersten Eckbereiche erstrecken.

Bei gemäß der Erfindung ausgeführten Spikes ist das Volumen des oberen Körperabschnitts des Spikekörpers derart verteilt, dass in jenen Bereichen, welche den Einbuchtungen zwischen den Armen des Spikepins zugewandt sind, das Volumen des oberen Körperabschnitts des Spikekörpers reduziert ist. Durch diese Maßnahme wird die passive Fähigkeit des Spikepins, den Spikekörper zu schützen, deutlich verstärkt, sodass Steinchen und Sandpartikel vom Spikekörper abgelenkt werden und den Spikekörper nicht berühren und abreiben können.

Bei einer bevorzugten Ausführung betragen die ersten Innenwinkel 90° bis 110° und die zweiten Innenwinkel 130° bis 150°. Bei einer derartigen Ausgestaltung ist das Volumen des Spikekörpers besonders vorteilhaft verteilt, sodass ein unerwünschter Verschleiß des Spikekörpers besonders effektiv verhindert ist.

Es ist von besonderem Vorteil, die Ausgestaltung und die Abmessungen des Spikepins an den Spikekörper bzw. den oberen Abschnitt des Spikekörpers anzupassen, um die erwähnte Schutzwirkung des Spikepins möglichst optimal zu unterstützen.

Bei einer diesbezüglichen und bevorzugten Maßnahme beträgt der auf das Niveau der Oberseite des Spikekörpers projizierte und entlang der Winkelhalbierenden ermittelte Abstand zwischen dem Ende jedes Arms und dem diesem gegenüber befindlichen ersten Eckbereich des Spikekörpers 1,20 mm bis 2,35m, bevorzugt 1,65 mm bis 1,95 mm.

Bei einer weiteren diesbezüglichen vorteilhaften Maßnahme ist die Oberseite des Spikekörpers von schmalen, in Richtung zum oberen Körperabschnitt des Spikekörpers geneigten Randabschnitten umlaufen.

Der Spikepin bzw. sein äußerer Pinabschnitt sollen möglichst stabil und belastbar ausgeführt sein. Es ist daher von Vorteil, wenn die Arme, wenn sie als von einem in Draufsicht insbesondere die Gestalt eines gleichseitigen Dreiecks aufweisenden Mittelteil des äußeren Pinabschnitts ausgehend betrachtet werden, an den Dreieckseiten des Mittelteils eine Breite von 0,40 mm bis 1,70, bevorzugt von 0,70 bis 1,30 mm, aufweisen und an ihren freien Enden eine Breite aufweisen, die um 0,10 bis 0,50, bevorzugt von 0,15 mm bis 0,30 mm, geringer ist als die erstgenannte Breite.

Bezüglich der Belastbarkeit des Spikepins ist es ferner vorteilhaft, wenn die Arme, wenn sie als von einem in Draufsicht insbesondere die Gestalt eines gleichseitigen Dreiecks aufweisenden Mittelteil des äußeren Pinabschnitts ausgehend betrachtet werden, am äußeren Pinabschnitt jeweils zwischen dem dreieckigen Mittelteil und ihrem freien Ende eine Erstreckungslänge von 0,50 mm bis 1,70 mm, bevorzugt von 0,70 mm bis 1,10 mm, aufweisen.

Ein besonders ausgewogenes Griffverhalten wird mit einem Spikepin erzielt, dessen Arme gemäß den Zacken eines regelmäßigen dreizackigen Sterns verlaufen und daher übereinstimmende Erstreckungslängen aufweisen. Fahrzeugreifen gemäß der Erfindung weisen im Laufstreifen erfindungsgemäß gestaltete Spikes auf.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine Schrägansicht einer Ausführungsvariante eines Spikes,
Fig. 2 eine Draufsicht auf den Spike in vergrößerter Darstellung und
Fig. 3 eine Seitenansicht des Spikes in einer Sicht gemäß dem Pfeil P₃ der Fig. 2.

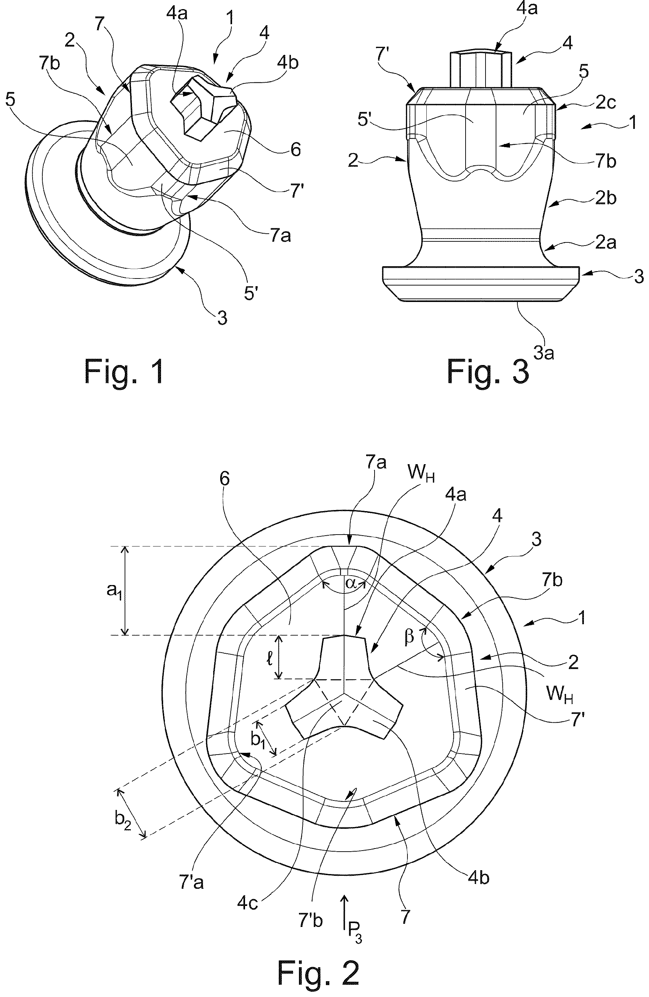

In der nachfolgenden Beschreibung beziehen sich Begriffe wie oben, unten und senkrecht auf eine aufrechte Position des Spikes, wie beispielsweise in den Fig. 3 gezeigt.

Der in den Figuren dargestellte Spike 1 besteht aus einem in Draufsicht kreisförmigen Fußflansch 3 mit einer kreisförmigen und ebenen Unterseite 3a, einem Spikekörper 2 und einem Spikepin 4. Der Spikekörper 2 besteht aus einem verschleißfesten Material, beispielsweise aus Metall, aus Gummi oder aus Kunststoff oder aus einer Kombination dieser Materialien. Das Spikepin 4 besteht insbesondere aus Hartmetall oder Sintermetall. Der Spikekörper 2 weist drei Abschnitte 2a, 2b und 2c auf, einen unmittelbar an den Fußflansch 3 anschließendem taillenartig verengten Körperabschnitt 2a, einen mittleren Körperabschnitt 2b und einen oberen Körperabschnitt 2c. Der mittlere Körperabschnitt 2b besitzt die Gestalt eines geraden Kegelstumpfs, dessen Durchmesser, beginnend beim Abschnitt 2a nach oben zu größer wird. Der an den mittleren Körperabschnitt 2b anschließende obere Körperabschnitt 2c ist prismenartig bzw. prismatisch, in Anlehnung an ein gerades, regelmäßiges sechsseitiges Prisma, gestaltet und weist eine gleichermaßen sechseckartig gestaltete, parallel zur Unterseite 3a des Fußflansches 3 verlaufende Oberseite 6 auf.

An der Oberseite 6 steht ein äußerer Pinabschnitt 4a des Spikepins 4, insbesondere um 1,00 mm bis 1,80 mm, über, ein weiterer nicht dargestellter Pinabschnitt des Spikepins 4 ist im Spikekörper 2 durch Kegelpresssitz verankert. Der im Spikekörper 2 verankerte Pinabschnitt weist eine geometrische Ausgestaltung auf, die mit jener des an der Oberseite 6 überstehenden Pinabschnitts 4a übereinstimmt, deren Durchmesser in Richtung Fußflansch 3 jedoch abnimmt.

Der die Wirkung des Spikes 1 als Eingriffselement auf eisigem Untergrund sicherstellende Spikepin 4 ist in Draufsicht einem insbesondere regelmäßigen dreizackigen Stern nachempfunden und besteht aus drei insbesondere gleich gestalteten, gemäß den drei Zacken verlaufenden Armen 4b, die als von einem in Draufsicht insbesondere die Gestalt eines gleichseitigen Dreiecks aufweisenden Mittelteil 4c ausgehend betrachtet werden können, welches in Fig. 2 mit gestrichelten Linien angedeutet ist. Entlang der Seiten des Mittelteils 4c weisen die Arme 4b in Draufsicht eine Breite b₁ von 0,40 mm bis 1,70, bevorzugt von 0,70 bis 1,30 mm, auf, an ihren freien Enden eine Breite b₂, die um 0,10 bis 0,50, bevorzugt von 0,15 mm bis 0,30 mm, geringer ist als die Breite b₁. Die Arme 4b des Spikepins 4 weisen insbesondere übereinstimmende Erstreckungslängen I von 0,50 mm bis 1,70 mm, bevorzugt von 0,70 mm bis 1,10 mm, auf.

Der obere Körperabschnitt 2c weist eine die Mantelfläche der prismatischen Gestaltung aufweisende Außenseite aus Flächenelementen 5, 5' und eine Oberseite 6 auf, welche gemäß der prismenartigen bzw. prismatischen Gestaltung des oberen Körperabschnitts 2c in Draufsicht gleichermäßen sechseckartig gestaltet ist. Die Flächenelemente 5 sind eben, gleich gestaltet und entsprechen den Prismenseiten. Die Flächenelemente 5' bilden sechs gerundete Eckbereiche 7a, 7b zwischen den Flächenelementen 5. Zu den gerundeten Eckbereichen gehören drei erste gleich gestaltete Eckbereiche 7a und drei zweite ebenfalls gleich gestaltete Eckbereiche 7b. Über den Umfang der Außenseite des oberen Körperabschnitt 2c wechselt jeweils ein Eckbereich 7a mit einem Eckbereich 7b ab.

Die Oberseite 6 ist von einem schmalen in Richtung zum oberen Körperabschnitt 2c des Spikekörper 2 geneigten Rand 7 aus Randabschnitten umlaufen, sechs gleich langen, in Draufsicht gerade verlaufenden Randabschnitten 7', drei ersten in Draufsicht gerundeten, gleich gestalteten Eckbereichen 7'a, entsprechend den Eckbereichen 7a, und drei zweiten in Draufsicht ebenfalls gerundeten und gleich gestalteten Eckbereichen 7'b, entsprechend den Eckbereichen 7b, jeweils zwischen den Randabschnitten 7'.An den ersten Eckbereichen 7'a und daher auch an den ersten Eckbereichen 7a liegen jeweils gleich große Innenwinkel α vor, an den zweiten Eckbereichen 7'b und daher auch an den zweiten Eckbereichen 7b liegen ebenfalls jeweils gleichgroße Innenwinkel β vor. An jedem Eckbereich 7a, 7'a, 7b, 7'b teilt eine Winkelhalbierende W_{H} den jeweils vorliegenden Innenwinkel α oder β. An den ersten Eckbereichen 7a, 7'a beträgt der Innenwinkel α 80° bis 130°, bevorzugt 90° bis 110°, an den zweiten Eckbereichen 7b, 7'b beträgt der Innenwinkel β 110° bis 170°, bevorzugt 130° bis 150°. Jeder erste Eckbereich 7a, 7'a befindet sich, in Draufsicht auf den Spikekörper 2 betrachtet, gegenüber dem Ende eines Arms 4b des Spikepins 4. Der auf das Niveau der Oberseite 6 des Spikekörpers 2 projizierte und entlang der jeweiligen Winkelhalbierenden W_{H} ermittelte Abstand a₁ zwischen dem Ende jedes Arms 4b und dem diesem gegenüber befindlichen ersten Eckbereich 7a beträgt 1,20 mm bis 2,35m, bevorzugt 1,65 mm bis 1,95 mm.

Die zweiten gerundeten Eckbereiche 7b, 7'b befinden sich jeweils gegenüber den Einbuchtungen zwischen den Armen 4b des Spikepins 4.

An jeden Randabschnitt 7' und jeden Eckbereich 7a und 7b schließen an der Außenfläche des oberen Körperabschnitts 2c des Spikekörpers 2 die Flächenelemente 5, 5' an, die die Mantelfläche der prismatischen Gestaltung nachbilden. Sämtliche Flächenelemente 5, 5' verlaufen senkrecht entlang der Außenfläche des Körperabschnitts 2c des Spikekörpers 2. Die Flächenelemente 5, 5' enden daher in der gezeigten Weise entweder an der Außenfläche des oberen Körperabschnitts 2c des Spikekörpers 2 oder an der Außenfläche des oberen Bereichs des mittleren Körperabschnitts 2b des Spikekörpers 2. Daraus ergeben sich die dargestellten gewellten und fließenden Enden der Flächenelemente 5, 5' an der Außenseite des Spikekörpers 2.

### Bezugszeichenliste

- 1: Spike
- 2: Spikekörper
- 2a, 2b, 2c: Körperabschnitt
- 3: Fußflansch
- 3a: Unterseite
- 4: Spikepin
- 4a: Pinabschnitt
- 4b: Arm
- 4c: Mittelteil
- 5: Flächenelement
- 5': Flächenelement
- 6: Oberseite
- 7: Rand
- 7': Randabschnitt
- 7a, 7b: Eckbereich
- 7'a, 7'b: Eckbereich
- b₁, b₂: Breite
- I: Erstreckungslänge
- W_{H}: Winkelhalbierende
- α, β: Winkel

## Patentansprüche

1. Spike (1) zum Verankern in einem Spikeloch eines Laufstreifens eines Fahrzeugreifens mit einem Spikekörper (2) , welcher einen Fußflansch (3), einen oberen Körperabschnitt (2c) und einen im Spikekörper (2) verankerten Spikepin (4) aufweist, welcher mit einem äußeren Pinabschnitt (4a) den oberen Körperabschnitt (2c) des Spikekörpers (2) überragt, wobei der Spikepin (4) drei insbesondere gleich große Winkel miteinander einschließende Arme (4b) aufweist, die gemäß den Zacken eines dreizackigen Sterns verlaufen,
**dadurch gekennzeichnet,**
**dass** der obere Körperabschnitt (2c) des Spikekörpers (2) einem sechsseitigen Prisma ähnlich gestaltet ist, eine in Draufsicht gleichermäßen sechseckartig gestaltete Oberseite (6) und eine Außenseite mit den Prismenseiten entsprechenden Flächenelementen (5) aufweist, zwischen welchen jeweils ein von weiteren Flächenelementen (5') gebildeter gerundeter Eckbereich (7a, 7b) ausgebildet ist, zu welchen Eckbereichen drei erste und drei zweite Eckbereiche (7a, 7b) gehören, die einander abwechseln, wobei in den ersten Eckbereichen (7a) gleich große, Winkelhalbierende (W_{H}) aufweisende erste Innenwinkel (α) von 80° bis 130°und in den zweiten Eckbereichen (7b) gleich große, Winkelhalbierende (W_{H}) aufweisende zweite Innenwinkel (β) von 110° bis 170° vorliegen, wobei die ersten Innenwinkel (α) um mindestens 5° kleiner sind als die zweiten Innenwinkel (β) und wobei der Spikepin (4) im Spikekörper (2) derart verankert ist, dass sich seine Arme (4b), in Draufsicht auf den Spikekörper (2) betrachtet, parallel zu den Winkelhalbierenden (W_{H}) der ersten Eckbereiche (7a) erstrecken.

2. Spike (1) nach Anspruch 1, **dadurch gekennzeichnet, dass** die ersten Innenwinkel (α) 90° bis 110° und die zweiten Innenwinkel (β) 130° bis 150° betragen.

3. Spike (1) nach Anspruch 1 oder 2, **dadurch gekennzeichnet, dass** der auf das Niveau der Oberseite (6) des Spikekörpers (2) projizierte und entlang der Winkelhalbierenden (W_{H}) ermittelte Abstand (a₁) zwischen dem Ende jedes Arms (4b) und dem diesem gegenüber befindlichen ersten Eckbereich (7a) des Spikekörpers (2) 1,20 mm bis 2,35m, bevorzugt 1,65 mm bis 1,95 mm, beträgt

4. Spike (1) nach einem der Ansprüche 1 bis 3, **dadurch gekennzeichnet, dass** die Oberseite (6) des Spikekörpers (2) von schmalen, in Richtung zum oberen Körperabschnitt (2c) des Spikekörpers (2) geneigten Randabschnitten (7') umlaufen ist.

5. Spike (1) nach einem der Ansprüche 1 bis 4, **dadurch gekennzeichnet, dass** die Arme (4a), wenn sie als von einem in Draufsicht insbesondere die Gestalt eines gleichseitigen Dreiecks aufweisenden Mittelteil (4c) des äußeren Pinabschnitts (4a) ausgehend betrachtet werden, an den Dreieckseiten des Mittelteils (4c) eine Breite (b₁) von 0,40 mm bis 1,70, bevorzugt von 0,70 bis 1,30 mm, und an ihren freien Enden eine Breite (b₂) die um 0,10 bis 0,50, bevorzugt von 0,15 mm bis 0,30 mm, geringer ist als die erstgenannte Breite (b₁) aufweisen.

6. Spike (1) nach einem der Ansprüche 1 bis 5, **dadurch gekennzeichnet, dass**, wenn die Arme (4a), wenn sie als von einem in Draufsicht insbesondere die Gestalt eines gleichseitigen Dreiecks aufweisenden Mittelteil (4c) des äußeren Pinabschnitts (4a) ausgehend betrachtet werden, jeweils zwischen dem dreieckigen Mittelteil (4c) und ihrem freien Ende eine Erstreckungslänge (I) von 0,50 mm bis 1,70 mm, bevorzugt von 0,70 mm bis 1,10 mm, aufweisen.

7. Spike (1) nach einem der Ansprüche 1 bis 6, **dadurch gekennzeichnet, dass** die Arme (4b) des Spikepins (4) gemäß den Zacken eines regelmäßigen dreizackigen Sterns verlaufen und daher übereinstimmende Erstreckungslängen (I) aufweisen.

8. Fahrzeugreifen mit einem Laufstreifen, in welchem Spikes gemäß einem oder mehreren der Ansprüche 1 bis 7 verankert sind.
